# EUROPÄISCHE PATENTSCHRIFT

(11) **EP 0 745 763 B1**
(45) Veröffentlichungstag und Bekanntmachung des Hinweises auf die Patenterteilung: **13.12.2000**
(21) Anmeldenummer: 96104567.1
(22) Anmeldetag: 22.03.1996
(51) Int. Cl.: F02M 37/22, B01D 35/30, B32B 7/02, B01D 35/06

(54) **Mehrschichtiger Kunststoff-Kraftstoffilter mit antistatischen Eigenschaften**
Multi-layer fuel filter with antistatic properties
Filtre carburant à plusieures couches avec propriétés antistatiques

(30) Priorität: 27.05.1995 DE 19519481
(43) Veröffentlichungstag der Anmeldung: 04.12.1996
(73) Patentinhaber: Degussa-Hüls Aktiengesellschaft, 60287 Frankfurt am Main (DE)
(72) Erfinder: Ries, Hans, Dr., 45772 Marl (DE)

(56) Entgegenhaltungen:
- EP-A- 0 470 606
- DE-A- 4 410 148
- GB-A- 2 279 890
- US-A- 4 906 494
- US-A- 5 213 882
- US-A- 5 380 432

## Beschreibung

Gegenstand der Erfindung ist ein Kunststoffkraftstoffilter mit einem durchgehend leitfähigen Pfad vom Inneren zum Äußeren hin, der somit antistatische Eigenschaften besitzt.

In Kraftstoffleitungssystemen für Fahrzeuge mit Verbrennungsmotor tritt durch den fließenden Kraftstoff eine hohe elektrostatische Aufladung auf. Diese kann sich unter bestimmten Witterungsbedingungen schlagartig entladen und Löcher in der Wand erzeugen, durch die der Kraftstoff ins Freie fließen kann. Durch Kontakt mit heißen Teilen im Motorraum oder der Auspuffanlage kann der Kraftstoff sich entzünden und zu einem Fahrzeugbrand führen.

Zur Vermeidung dieses Problems ist es erforderlich, nicht nur die Kunststoffkraftstoffleitung selbst, was Stand der Technik ist, sondern auch den Kunststoff, aus dem das Filtergehäuse besteht, leitfähig auszurüsten und eine leitende Verbindung zwischen Fahrzeugchassis und dem Filter herzustellen. Hierdurch werden Filter und Chassis auf gleiches Potential gebracht und somit ein Ladungsaufbau verhindert (siehe zu diesem Problem US-A-5 380 432 und US-A-5 213 882).

Leitfähig ausgerüstete Kunststoffkraftstoffilter werden in den US-PSS 5 164 084 und 5 164 879 beschrieben. Hierbei besteht jedoch die gesamte Wand des Filtergehäuses aus einer leitfähig eingestellten Formmasse. Dies bringt Nachteile mit sich, da derartige Werkstoffe im Vergleich mit nicht leitfähigen Formmassen auf gleicher Polymerbasis sehr teuer sind und zudem schlechtere mechanische Eigenschaften haben können. Darüber hinaus ist bei vielen leitfähig eingestellten Formmassen eine geringere Beständigkeit gegenüber oxidierten Kraftstoffen (sour-gas) festzustellen.

Um diese Probleme zu lösen, wird z. B. in der US-PS 5 382 359 vorgeschlagen, ein Filtergehäuse aus nicht leitfähigem Kunststoff mit einer metallischen Überzugsschicht auszurüsten. Der zur Ableitung der im Filterinneren entstehenden Ladungen benötigte leitfähige Pfad zur Außenwand hin kann hier aber nur erzeugt werden, wenn eine durchgehende Schicht über die Anschlußnippel von innen nach außen geschaffen wird. Dies ist insbesondere mit galvanischen Verfahren schwierig, die zudem sehr zeit- und kostenintensiv sowie mit der Verwendung von wenig umweltfreundlichen Chemikalien verbunden sind.

Ein Aufbringen der leitfähigen Schicht im Tauchverfahren ist ebenso äußerst problematisch, da die Filter aus zwei Hälften aufgebaut sind, die miteinander verschweißt werden müssen. Somit muß die Schweißfläche frei von dem leitfähigen Überzug sein. Hierdurch wird eine aufwendige Abdekkung der Flächen erforderlich und gleichzeitig der leitfähige Pfad zwischen Filterinneren und Außenhaut an der Schweißstelle unterbrochen. Dagegen ist eine nachträgliche Beschichtung nach dem Verschweißen insbesondere im Filterinneren nicht möglich.

Verfolgt man den Weg weiter, der durch die oben genannten US-PSS 5 164 084 und 5 164 879 vorgegeben ist, so stellt man fest, daß das dort beschriebene Wandungsmaterial nicht nur wegen des hohen Preises von Nachteil ist. Das verwendete Polyamid 12 (PA 12) weist nämlich gegenüber verschiedenen Kraftstoffkomponenten eine relativ hohe Permeationsrate auf, was besonders bei der Verwendung methanolhaltiger oder ethanolhaltiger Kraftstoffe zu Buche schlägt. Dadurch können, insbesondere bei hohen Temperaturen, beträchtliche Verluste an Kraftstoffkomponenten entstehen.

Es ist zwar bekannt, daß verschiedene thermoplastische Werkstoffe, wie Fluorpolymere, Polyester oder Ethylen-Vinylalkohol-Copolymere (EVOH), eine gute Sperrwirkung gegenüber Kraftstoffen besitzen. Da aber ihre Schlagzähigkeit, insbesondere bei niedrigen Temperaturen, unbefriedigend ist und bei weitem nicht an die der Polyamide heranreicht, kommen sie für eine Verwendung für Kunststoffkraftstoffilter, wie sie in den US-PSS 5 164 084 und 5 164 879 beschrieben sind, nicht in Betracht.

Es bestand daher die Aufgabe, einen leitfähig eingestellten Kunststoffkraftstoffilter zu entwickeln, der auf einer kostengünstigen Materialbasis beruht, einfach herzustellen ist und gleichzeitig im Bedarfsfalle die Möglichkeit eröffnet, die Diffusion von Kraftstoffkomponenten durch das Filtergehäuse zurückzudrängen. Dieser Bedarf besteht insbesondere bei Kraftstoffen mit höherem Alkoholgehalt.

Diese Aufgabe wurde durch einen mehrschichtigen Kunststoffkraftstoffilter gelöst, der aus mindestens drei Schichten besteht, wobei die innere und die äußere Schicht aus einem leitfähig ausgerüsteten Kunststoff (Komponente A) bestehen, zwischen die eine oder mehrere Schichten aus einem oder mehreren, nicht leitfähig ausgerüsteten Kunststoffen (Komponente B usw.) eingebettet sind, wobei die innere und die äußere Schicht miteinander einen leitfähigen Pfad bilden.

Das Gehäuse derartiger Filter kann mittels Mehrkomponentenspritzguß oder im Monosandwich-Verfahren hergestellt werden.

Die Herstellung von Kunststoffartikeln im Mehrkomponentenspritzguß ist Stand der Technik (siehe z. B. Th. Zipp, Fließverhalten beim 2-Komponenten-Spritzgießen, Dissertation, RWTH Aachen, 1992). Beim Einsatz zweier Komponenten A und B wird zunächst die leitfähige Komponente A vorgelegt und die nicht leitfähige Komponente B nachgespritzt. Bei einem derartigen Vorgehen entsteht, wenn man einen Schnitt durch die Filterwand betrachtet, die Schichtenfolge A/B/A, wobei zu Anfang und Ende des Fließweges jedoch die leitfähige Schicht A geschlossen ist, da nur der Kernbereich durch die Komponente B gefüllt wird. Somit ist die durchgängige Übertragung der Ladungen von innen nach außen gesichert.

Darüber hinaus ist es möglich, daß durch entsprechende Taktung des Einspritzvorgangs im 2-Komponenten-Spritzgießverfahren ein mehrfacher Wechsel der Komponenten A und B erfolgt, so daß z. B. ein Aufbau A/B/A/B/A oder A/B/A/B/A/B/A erzeugt wird. Bei Verwendung von drei Spritzaggregaten sind zudem auch fünfschichtige Verbunde vom Typ A/B/C/B/A herstellbar, beispielsweise der Verbund einer leitfähigen Komponente A mit einem nicht kompatiblen Kernmaterial C über einen Haftvermittler B.

Auch das Monosandwichverfahren ist Stand der Technik; siehe hierzu beispielsweise C. Jaroschke, Neue Wege beim Sandwich-Spritzgießen, Kunststoffe 83 (1993) 7, S. 519 - 521.

Die Komponente B kann zum einen aus dem gleichen Grundpolymer wie die Komponente A bestehen. Jedoch kann die Komponente B (und ggf. auch C usw.) auch aus einem anderen Grundpolymeren als die Komponente A bestehen. Vorzugsweise sollten hierbei Polymerkombinationen aus miteinander verträglichen oder mit Verträglichkeitsvermittlern modifizierten Formmassen verwendet werden. Hierbei können zwei Zielrichtungen verfolgt werden:
a) Verbilligung der Polymerbasis. In diesem Fall besteht die Komponente B aus einer preiswerteren Formmasse als die Komponente A.
b) Erhöhung der Sperrwirkung gegenüber dem Kraftstoff oder einzelnen Kraftstoffkomponenten. Hier können die gleichen Materialkombinationen wie bei entsprechenden Mehrschichtrohren verwendet werden. An dieser Stelle soll auf die Offenbarung folgender Schriften ausdrücklich Bezug genommen werden:
   DE-OSS bzw. -PSS 40 01 125, 40 06 870, 41 12 662, 41 12 668, 41 37 430, 41 37 431, 41 37 434, 42 07 125, 42 14 383, 42 15 608, 42 15 609, 42 40 658, 43 02 628, 43 10 884, 43 26 130, 43 36 289, 43 36 290, 43 36 291, die nicht vorveröffentlichten deutschen Patentanmeldungen P 44 10 148.1 und 195 07 025.9 sowie WO-A-93/21466, WO-A-94/18 485, EP-A-0 198 728 und EP-A-0 558 373.

Die Komponente A kann beispielsweise aus einer Polyamid-Formmasse oder aus einer Polyolefin-Formmasse bestehen. Weitere geeignete Werkstoffe sind Formmassen aus thermoplastischen Polyestern oder Polyesterelastomeren. Als Komponente B geeignet sind beispielsweise Formmassen auf Basis von Polyamid, Polyolefinen, thermoplastischen Polyestern, Fluorpolymeren oder EVOH. Hier kann als Polyamid vorteilhafterweise ein Typ auf Basis von m- oder p-Xylylidendiamin (z. B. PA MXD6) verwendet werden.

Als Polyamid kommen darüber hinaus in erster Linie aliphatische Homo- und Copolyamide in Frage. Als Beispiel seien die 4.6-, 6.6-, 6.12-, 8.10-, 10.10-Polyamide o. ä. genannt. Bevorzugt werden 6-, 10.12-, 11-, 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure oder Terephthalsäure als Cosäure bzw. Bis(4-aminocyclohexyl)methan, Trimethylhexamethylendiamin, Hexamethylendiamin o. ä. als Codiamin enthalten.

Die Herstellung dieser Polyamide ist bekannt (z. B.: D. B. Jacobs, J. Zimmermann, **Polymerization Processes,** S. 424 - 467; Interscience Publishers, New York (1977); DE-AS 21 52 194).

Ebenfalls geeignet als Polyamide sind gemischt aliphatisch/aromatische Polykondensate, wie sie z. B. in den US-PSS 2 071 250, 2 071 251, 2 130 523, 2 130 948, 2 241 322, 2 312 966, 2 512 606, 3 393 210 bzw. in Kirk-Othmer; **Encyclopedia of Chemical Technology,** 3. Aufl., Vol. 18, Wiley & Sons (1982), S. 328 und 435, beschrieben werden. Weitere als Polyamide geeignete Polykondensate sind Poly(etheresteramide) bzw. Poly(etheramide). Derartige Produkte werden z. B. in den DE-OSS 27 12 987, 25 23 991 und 30 06 961 beschrieben.

Das Molekulargewicht (Zahlenmittel) der Polyamide liegt oberhalb von 4 000, vorzugsweise oberhalb von 10 000. Bevorzugt liegt hierbei die relative Viskosität (ηᵣₑₗ) im Bereich von 1,65 bis 2,4.

Die Polyamide können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates**, Interscience Publishers, New York (1981)], Acrylnitril/Styrol/Butadien- [Houben-Weyl, Methoden der organischen Chemie, Bd. 14/1, Georg Thieme Verlag Stuttgart, S. 393 - 406; **Ullmanns Encyclopädie der technischen Chemie, 4.** Auflage, Bd. 19, Verlag Chemie Weinheim (1981), S. 279 - 284], Acrylnitril/Styrol/Acrylat- [**Ullmanns Encyclopädie der technischen Chemie,** 4. Auflage, Bd. 19, Verlag Chemie Weinheim (1981), S. 277 - 295], Acrylnitril/Styrol-Copolymerisate [**Ullmanns Encyclopädie der technischen Chemie,** 4. Auflage, Bd. 19, Verlag Chemie Weinheim (1981), S. 273 ff.] oder Polyphenylenether (DE-OSS 32 24 691 und 32 24 692, US-PSS 3 306 874, 3 306 875 und 4 028 341) genannt.

Sofern erforderlich, können die Polyamide schlagzäh eingestellt werden. Geeignete Modifier sind z. B. Ethylen/Propylen- oder Ethylen/Propylen/Dien-Copolymere (EP-A-0 295 076), Polypentenylen, Polyoctenylen oder statistische bzw. blockartig aufgebaute Copolymere aus alkenylaromatischen Verbindungen mit aliphatischen Olefinen oder Dienen (EP-A-0 261 748). Weiterhin können als schlagzähmachende Kautschuke Kern/Schale-Kautschuke mit einem zähelastischen Kern aus (Meth)Acrylat-, Butadien- oder Styrol/ Butadien-Kautschuk mit Glastemperaturen T < -10 °C verwendet werden, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Die genannten Polyamide werden für sich oder in Gemischen eingesetzt.

Als Polyolefin kommen Homopolymere und Copolymere von α-Olefinen mit 2 bis 12 C-Atomen infrage, beispielsweise von Ethylen, Propen, 1-Buten, 1-Hexen oder 1-Octen. Weiterhin geeignet sind Copolymere und Terpolymere, die zusätzlich zu diesen Monomeren weitere Monomere, insbesondere Diene, enthalten, wie beispielsweise Ethylidennorbornen, Cyclopentadien oder Butadien.

Bevorzugte Polyolefine sind Polyethylen und Polypropylen. Grundsätzlich kann hiervon jeder handelsübliche Typ eingesetzt werden. So kommen beispielsweise infrage: lineares Polyethylen hoher, mittlerer oder niedriger Dichte, LDPE, Ethylencopolymere mit kleineren Mengen (bis maximal ca. 40 Gew.-%) an Comonomeren wie n-Butylacrylat, Methylmethacrylat, Maleinsäureanhydrid, Styrol, Vinylalkohol, Acrylsäure, Glycidylmethacrylat o. ä., isotaktisches oder ataktisches Homopolypropylen, Randomcopolymere von Propen mit Ethen und/oder 1-Buten, Ethylen-Propylen-Blockcopolymere und dergleichen mehr. Derartige Polyolefine können auch eine Schlagzähkomponente wie z. B. EPM- oder EPDM-Kautschuk oder SEBS enthalten. Darüber hinaus können sie auch, dem Stand der Technik entsprechend, funktionelle Monomere wie Maleinsäureanhydrid, Acrylsäure oder Vinyltrimethoxysilan aufgepfropft enthalten.

Die thermoplastischen Polyester weisen nachstehende Grundstruktur auf: 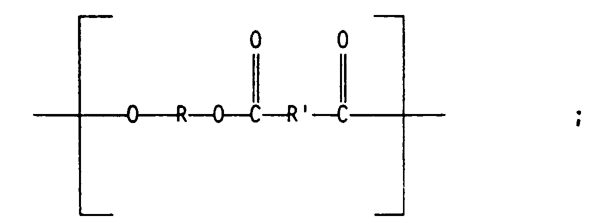 dabei stellt R einen divalenten verzweigten oder nichtverzweigten aliphatischen und/oder cycloaliphatischen Rest mit 2 bis 12, vorzugsweise 2 bis 8 C-Atomen, in der Kohlenstoffkette und R' einen divalenten aromatischen Rest mit 6 bis 20, vorzugsweise 8 bis 12, C-Atomen im Kohlenstoffgerüst dar.

Als Beispiele für die bei der Herstellung einzusetzenden Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein Diol mit nachstehender allgemeiner Formel 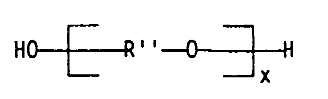 ersetzt sein, wobei R'' einen zweiwertigen Rest mit 2 bis 4 C-Atomen bedeutet und x einen Wert von 2 bis 50 annehmen kann.

Bevorzugt als Diole werden Ethylenglykol und Tetramethylenglykol eingesetzt.

Als bei der Herstellung einzusetzende aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure oder deren polyesterbildende Derivate, wie z. B. Dimethylester, in Frage.

Bis zu 20 Mol-% dieser Dicarbonsäuren können durch aliphatische Dicarbonsäuren, wie z. B. Bernsteinsäure, Maleinsäure, Fumarsäure, Sebacinsäure, Dodecandisäure u. a. ersetzt sein.

Die Herstellung der thermoplastischen Polyester gehört zum Stand der Technik (DE-OSS 24 07 155, 24 07 156; Ullmanns Encyclopädie der technischen Chemie, 4. Auflage, Band 19, Seite 65 ff, Verlag Chemie GmbH, Weinheim 1980).

Die erfindungsgemäß eingesetzten Polyester weisen eine Viskositätszahl (J-Wert) im Bereich von 80 bis 240 cm³/g auf.

Bevorzugte thermoplastische Polyester sind Polyethylenterephthalat und Polybutylenterephthalat.

Sofern erforderlich, können die Polyester schlagzäh eingestellt werden.

Als Fluorpolymere sind beispielsweise Ethylen-Tetrafluorethylen-Copolymere (ETFE; z. B. Tefzel 200 von DuPont oder Hostaflon ET 6235 von Hoechst), Tetrafluorethylen-Hexafluorpropen-Vinylidenfluorid-Terpolymere (THV; z. B. Hostaflon TFB von Hoechst), Ethylen-Chlortrifluorethylen-Copolymere (ECTFE; z. B. Halar von Ausimont) oder Polyvinylidenfluorid (PVDF) geeignet. Diese Polymeren können Weichmacher enthalten; die verwendung von weichmacherfreien Fluorpolymeren ist jedoch bevorzugt.

ETFE, THV und ECTFE sind beispielsweise in H. Domininghaus, **Die Kunststoffe und ihre Eigenschaften, 4. Auflage,** Kapitel 2.1.7 (Fluor-Kunststoffe) beschrieben.

Herstellung und Struktur von Polyvinylidenfluorid sind ebenfalls bekannt (Hans R. Kricheldorf, **Handbook of Polymer Synthesis**, Part A, Verlag Marcel Dekker Inc. New York - Basel - Hongkong, S. 191 f.: Kunststoff-Handbuch, 1. Auflage, Band XI, Carl Hanser Verlag München (1971), S. 403 ff.).

Es können erfindungsgemäß auch Polymere auf Basis von Polyvinylidenfluorid enthalten sein, die bis zu 40 Gew.-% andere Monomere aufweisen. Als solche zusätzlichen Monomeren seien beispielsweise genannt: Trifluorethylen, Ethylen, Propen und Hexafluorpropen.

Das erfindungsgemäß eingesetzte Polyvinylidenfluorid weist in der Regel einen Melt Flow-Index von < 17 g/10 min., vorzugsweise von 2 bis 13 g/10 min. (DIN 53 735) auf, gemessen bei 230 °C und unter einer Belastung von 5 kg.

Bei der Schichtenfolge A/B/A (und entsprechend auch bei der Schichtenfolge A/B/A/B/A) können beispielsweise folgende Materialkombinationen verwendet werden:
- A =: Polyamid, insbesondere PA 6, PA 66, PA 11 oder PA 12
- B =: gemäß dem oben genannten Stand der Technik modifiziertes PVDF, anderes Fluorpolymer oder Polybutylenterephthalat, EVOH oder ein mit A kompatibles Polyamid, beispielsweise ein Typ auf Basis von m- oder p-Xylylidendiamin und Adipinsäure.

Bei der Schichtenfolge A/B/C/B/A sind insbesondere folgende Materialkombinationen von Interesse:
1.
   - A =: Polyamid, insbesondere PA 6, PA 66, PA 11 oder PA 12
   - B =: ein Haftvermittler gemäß dem Stand der Technik
   - C =: EVOH
2.
   - A =: Polyamid, insbesondere PA 6, PA 66, PA 11 oder PA 12
   - B =: gemäß dem oben genannten Stand der Technik modifiziertes PVDF, anderes Fluorpolymer oder Polybutylenterephthalat
   - C =: Polyamid, insbesondere PA 6, PA 66, PA 11 oder PA 12
3.
   - A =: Polyamid, insbesondere PA 6, PA 66, PA 11 oder PA 12
   - B =: ein Haftvermittler gemäß dem Stand der Technik
   - C =: Polyolefin, insbesondere Polyethylen oder Polypropylen

Die Innen- und die Außenschicht werden durch Compoundieren des Grundpolymers mit einem elektrisch leitfähigen Zusatz leitfähig ausgerüstet. Dies kann nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder besonders vorteilhaft Graphitfibrillen verwendet werden. Es können auch Mischungen verschiedener leitfähiger Zusätze eingesetzt werden.

Graphit-Fibrillen werden beispielsweise in Plastics World, November 1993, Seite 10 f beschrieben. Es handelt sich um winzige Fasern aus kristallinem Graphit. Beim derzeit kommerziell erhältlichen Material liegt ihr durchschnittlicher Durchmesser in der Größenordnung um 0,01 micron mit einem L/D-Verhältnis in der GröBenordnung um 500 : 1 bis 1 000 : 1. Grundsätzlich geeignet für den Zweck der vorliegenden Erfindung sind auch Graphitfibrillen, wie sie in den WO-Anmeldungen Nr. 8603455, 8707559, 8907163, 9007023 und 9014221 sowie in JP-A-03287821 beschrieben sind.

Der Gehalt an Graphitfibrillen in der Formmasse beträgt in der Regel 1 bis 30 Gew.-%, vorzugsweise 1,5 bis 10 Gew.-% und besonders bevorzugt 2 bis 7 Gew.-%.

Die Dicke der Innen- und der Außenschicht wird so gewählt, daß einerseits ein gebildetes elektrisches Potential zuverlässig abgeleitet werden kann, andererseits aber aus Kostengründen möglichst wenig Material benötigt wird.

Der erfindungsgemäße Kraftstoffilter findet Einsatz insbesondere im Kraftfahrzeugsektor.

## Patentansprüche

1. Mehrschichtiger Kunststoffkraftstoffilter, der aus mindestens drei Schichten besteht, wobei die innere und die äußere Schicht aus einem leitfähig ausgerüsteten Kunststoff A bestehen, zwischen die eine oder mehrere Schichten aus einem oder mehreren, nicht leitfähig ausgerüsteten Kunststoffen B, C usw. eingebettet sind, wobei die innere und die äußere Schicht miteinander einen durchgehend leitfähigen Pfad bilden.

2. Kunststoffkraftstoffilter gemäß Anspruch 1,
dadurch gekennzeichnet,
daß er die Schichtenfolge A/B/A aufweist, wobei die Schicht B aus dem gleichen Grundpolymer wie die Schichten A aufgebaut ist.

3. Kunststoffkraftstoffilter gemäß Anspruch 1,
dadurch gekennzeichnet,
daß er die Schichtenfolge A/B/A aufweist, wobei die Schicht B aus einem anderen Grundpolymer als die Schichten A aufgebaut ist.

4. Kunststoffkraftstoffilter gemäß einem der Ansprüche 1 oder 3,
dadurch gekennzeichnet,
daß eine Zwischenschicht enthalten ist, die Sperreigenschaften gegenüber dem Kraftstoff oder einzelnen Kraftstoffkomponenten besitzt.

5. Kunststoffkraftstoffilter gemäß einem der Ansprüche 1 oder 4,
dadurch gekennzeichnet,
daß er die Schichtenfolge A/B/A/B/A aufweist.

6. Kunststoffkraftstoffilter gemäß einem der Ansprüche 1 oder 4,
dadurch gekennzeichnet,
daß er die Schichtenfolge A/B/C/B/A aufweist.

7. Kunststoffkraftstoffilter gemäß einem der Ansprüche 1 bis 6,
dadurch gekennzeichnet,
daß die leitfähigen Schichten A Graphitfibrillen, Leitruß, Kohlefasern, Metallfasern und/oder intrinsisch leitfähige Polymere enthalten.

8. Kunststoffkraftstoffilter gemäß einem der Ansprüche 1 bis 7,
hergestellt durch Mehrkomponentenspritzgießen oder im Monosandwich-Verfahren.

9. Kunststoffkraftstoffilter gemäß einem der Ansprüche 1 bis 5 oder 7,
hergestellt durch Zweikomponentenspritzgießen.

## Claims

1. A multilayer plastic fuel filter comprising at least three layers, wherein the inner and outer layers comprise a plastic A which has been made conductive, and have embedded between them one or more layers of one or more plastics B, C etc. which have not been made conductive, with the inner and outer layers together forming a continuous conductive path.

2. A plastic fuel filter according to claim 1, characterized in that it has the order of layers A/B/A, with the layer B being made up of the same base polymer as the layers A.

3. A plastic fuel filter according to claim 1, characterized in that it has the order of layers A/B/A, with the layer B being made up of a different base polymer than the layers A.

4. A plastic fuel filter according to claim 1 or 3, characterized in that it contains an intermediate layer having barrier properties towards the fuel or individual fuel components.

5. A plastic fuel filter according to claim 1 or 4, characterized in that it has the order of layers A/B/A/B/A.

6. A plastic fuel filter according to claim 1 or 4, characterized in that it has the order of layers A/B/C/B/A.

7. A plastic fuel filter according to any of claims 1 to 6, characterized in that the conductive layers A contain graphite fibrils, conductivity black, carbon fibres, metal fibres and/or intrinsically conductive polymers.

8. A plastic fuel filter according to any of claims 1 to 7, produced by multicomponent injection moulding or by the monosandwich process.

9. A plastic fuel filter according to any of claims 1 to 5 or 7, produced by two-component injection moulding.

## Revendications

1. Filtre pour carburant en matière plastique à plusieurs couches qui consiste en au moins trois couches,
dans lequel la couche intérieure et la couche extérieure consistent en une matière plastique A équipée pour conduire l'électricité entre lesquelles une ou plusieurs couches à base d'une ou plusieurs matières plastiques équipées d'une manière non conductrice B, C etc sont incluses, la couche intérieure et la couche extérieure formant réciproquement un chemin conducteur d'une manière générale.

2. Filtre pour carburant en matière plastique selon la revendication 1,
caractérisé en ce qu'
il possède la succession de couches A/B/A dans laquelle la couche B est constituée du même polymère de base que les couches A.

3. Filtre pour carburant en matière plastique selon la revendication 1,
caractérisé en ce qu'
il possède la succession de couches A/B/A dans laquelle la couche B est constituée d'un autre polymère de base que les couches A.

4. Filtre pour carburant en matière plastique selon l'une quelconque des revendications 1 à 3,
caractérisé en ce qu'
une couche intermédiaire est contenue qui possède des propriétés d'arrêt vis-à-vis du carburant ou des composants individuels du carburant.

5. Filtre pour carburant en matière plastique selon l'une quelconque des revendications 1 ou 4,
caractérisé en ce qu'
il possède la succession de couches A/B/A/B/A.

6. Filtre pour carburants en matière plastique selon l'une quelconque des revendications 1 ou 4,
caractérisé en ce qu'
il possède la succession de couches A/B/C/B/A.

7. Filtre pour carburant en matière plastique selon l'une quelconque des revendications 1 à 6,
caractérisé en ce que
les couches conductrices A contiennent des fibrilles de graphite, du noir conducteur, des fibres de carbone, des fibres métalliques, et/ou des polymères conducteurs d'une manière intrinsèque.

8. Filtre pour carburant en matière plastique selon l'une quelconque des revendications 1 à 7,
préparé par moulage par injection à plusieurs composants ou dans un processus en sandwich avec un seul composant.

9. Filtre pour carburant en matière plastique selon l'une quelconque des revendications 1 à 5, ou 7,
préparé par coulée à deux composantes.
